# EUROPEAN PATENT APPLICATION

(11) **EP 0 811 720 A2**
(43) Date of publication of application: **10.12.1997**
(21) Application number: 97303883.9
(22) Date of filing: 05.06.1997
(51) Int. Cl.: E01B 9/10, F16B 31/02

(54) **Fastener assemblies for railway rails**

(30) Priority: 06.06.1996 GB 9611863
(71) Applicant: ASTRAL ENTERPRISE LIMITED, Grand Turk (TC)
(72) Inventor: Henry, Hugh Richard, Pirbright, Surrey GU24 0JE (GB)
(74) Representative: Carpmael, John William Maurice

(57) **Abstract**

The invention provides a fastener assembly for fastening railway rails (12) to a railway sleeper (14), in which deformable clip means (28 or 60 or 72), such as a VOSSLOH clip or a NABLA clip (28 or 60 or 62 or 76) and a force applying means (10 or 50,52), such as a screw (10) or a nut and bolt (50,52), clamp the rail (12) to the sleeper (14). To prevent over tightening of the force applying means (10, 50,52), a ratcheting tooth (34, 34a or 80) is provided which engages with the head (16) of the screw (10) or with the nut (50,52) to limit the torque applied to the screw (10) or nut (50,52) and so prevent thread damage. The ratcheting tooth (34, 34a or 80) is located in an aperture (24 or 69) in a baseplate (22 or 72 or 74 or 76) with which the clip means (28 or 60 or 76) co-operates.

## Description

This invention relates to fastener assemblies employing large headed screws or nut and bolt arrangements by means of which railway rails or railway chairs or baseplates are fastened to railway sleepers.

Most railway sleepers are made from wood, or concrete which may incorporate wooden or plastic inserts. Fixings such as baseplates are then fastened to the sleepers by means of screws which are inserted into a narrow bore made in the wood so that a thread to receive the screw forms in the wood or into a threaded bore moulded into the plastic and tightened mechanically or manually. wooden or plastic bore.

Because the screw is usually secured in place in a sleeper with a large wrench, power impact wrench or driver, applying substantial torque, the screw is liable to be overtightened. This can lead to thread damage, and in extreme cases stripping of the thread formed in the sleeper so that pull-out strength is greatly diminished.

The usual solution to this problem is to use specialised equipment to pre-set and limit the torque to be applied to the screw. However, the technology is only as good as the condition of the equipment and the quality of labour which is not always assured.

In European Patent Application No. 94303222.7 (EP-A-0 623 705) there is described a fastener assembly for fastening a railway rail to a railway sleeper, comprising a screw and a base member, each of which is provided with co-operating means, and spring means which is deformable by rotation of the screw into the sleeper to allow the co-operating means to move into interlocking engagement with each other either directly, or via an intermediate member, to prevent further rotation of the screw.

Typically the screw comprises a head portion and a threaded shank for engaging a threaded bore in the railway sleeper, and the base member comprises a baseplate having an aperture through which the threaded shank of the screw passes, there being at least one and preferably at least three depending lugs on the underside of the head portion forming the co-operating means on said screw.

In one embodiment, the resilient member comprises a resilient deformable washer which is located between the baseplate and the head portion of the screw, and the co-operating means on the baseplate comprises at least one, but preferably a plurality of ramps which are separated by steps disposed around the aperture in the baseplate and which are arranged so that as the screw is tightened, they will progressively resist the turning motion of the screw, until positive engagement or interlock occurs.

In an alternative method of locating the railway rails on the sleepers, a spring clip is used to hold each rail on a base pad on each sleeper, the spring clip being deformed by a screw which engages within the sleeper.

One such method is manufactured by Vossloh-Werke GmbH, and uses VOSSLOH clips and is described with reference to Figure 15 of the above application. Another such method is known as the Nabla or Nabla-Fortax system and uses NABLA plates and is described with reference to Figure 16 of the above application. The present invention has been specifically designed for use with VOSSLOH clips and NABLA plates.

VOSSLOH clips and NABLA plates are spring devices which are designed to be deformed and forced down into clamping engagement with a bottom flange of a railway rail, to hold the rail on a base number, e.g. a sleeper, with the aid of a screw or nut and bolt. The screw or nut has to be turned a sufficient number of turns so as to deform the plate or clip sufficiently to exert a predetermined clamping force on the flange of the rail. If a screw is used and is overtightened, then there is a risk that the reaction force acting on the screw will be such as to pull the screw out of the sleeper. The present invention is intended to prevent this happening, by limiting the clamping force applied by the screw or nut.

According to the present invention, we provide a fastener assembly for e.g., fastening a railway rail to a railway sleeper, comprising deformable clip means, adjustable force applying means which, when tightened, applies an increasing force to the clip means to deform the clip means to clamp the rail to the sleeper and a ratcheting tooth means which co-operates with the force applying means to prevent the latter causing the clip means to be deformed beyond an amount such that it applies the correct clamping force to clamp the rail to the sleeper, or to prevent damage occurring due to over-tightening of the force applying means.

Preferably the force applying means comprises a screw having a head portion and a threaded shank for engaging a bore in the railway sleeper, and the clip means has an aperture or the like through which the threaded shank of the screw passes. Alternatively, the force applying means may comprise a nut which co-operates with a threaded bolt projecting from the sleeper, the bolt passing through the aperture or the like in the clip means.

The tooth means may be located in a base plate which forms a key with the sleeper and with which the clip means co-operates, there being an aperture in the base plate through which the force applying means passes and wherein the base plate prevents the tooth means from turning as the force applying means is progressively adjusted or tightened. Alternatively, the tooth means may be located in a suitable gap between the clip means and the force applying means, and be shaped such that when so located it cannot rotate.

The clip means may be a VOSSLOH clip or a NABLA clip.

It is preferred that the ratcheting tooth means projects above the clip means when the force applying means has deformed the clip means by a sufficient amount to apply the correct clamping force to the rail, so that the ratcheting tooth means will engage the underside of the screw or of the nut, to prevent further rotation thereof.

In one construction the head of the screw or the nut is serrated on a lower face thereof to engage with the tooth means, but alternatively, the head of the screw or the nut may be formed of a softer material than the tooth means.

Several embodiments of the present invention are now described by way of example only with reference to the accompanying drawings, in which:
FIGURE 1 is a perspective view of one embodiment of a fastener assembly, which incorporates a VOSSLOH clip, but omitting a securing screw;
FIGURE 2 is a further perspective view of the assembly of Figure 1, showing a rail fastened in place;
FIGURE 3 is a partial section on line III-III of Figure 2;
FIGURE 4a is a plan view of an alternative fastener assembly;
FIGURE 4b is a front elevation of part of the assembly of Figure 4;
FIGURE 5 is a view similar to Figure 2, but of an alternative embodiment of assembly, which incorporates a NABLA clip;
FIGURE 6 is a view similar to Figure 5, but of a further embodiment of assembly which incorporates a modified NABLA clip.
FIGURE 7 is a view similar to Figure 3 but of another embodiment of fastener assembly incorporating another design of NABLA clip;
FIGURE 8 is a schematic plan view of the NABLA clip of figure 7, showing a slot therein through which a ratcheting tooth projects; and
FIGURE 9 is a schematic plan view of a baseplate showing one design of ratcheting tooth.

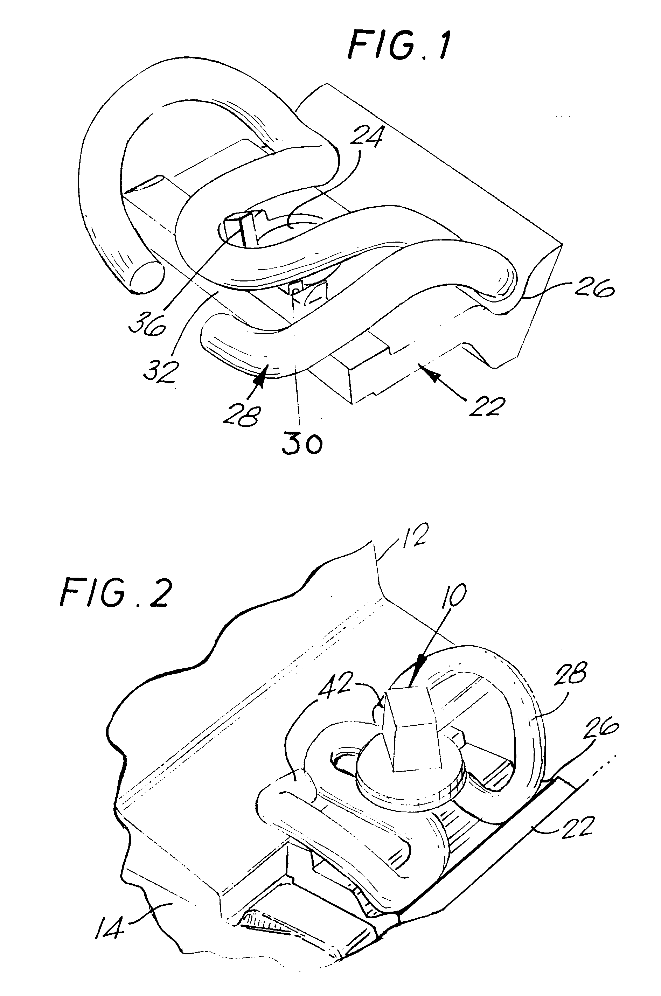

Referring to Figures 1 to 3, a screw or threaded fastener 10 for securing a railway rail 12 to a sleeper 14 consists of a domed head 16 and a depending threaded shank 18. The screw head 16 is provided with a flattened underside 20, and a square or rectangular top 11 by means of which the screw can be rotated.

The sleeper 14 is shaped to receive the bottom of the rail 12 and two plastic baseplates 22, one on each side of the rail. The baseplates 22 are largely of known construction, and have a through aperture 24 into which the threaded shank 12 of the screw 10 locates. The baseplate 22 has an upper surface which is recessed at 26 to receive in known manner the downturned curved portions of a VOSSLOH clip 28 which is of known construction.

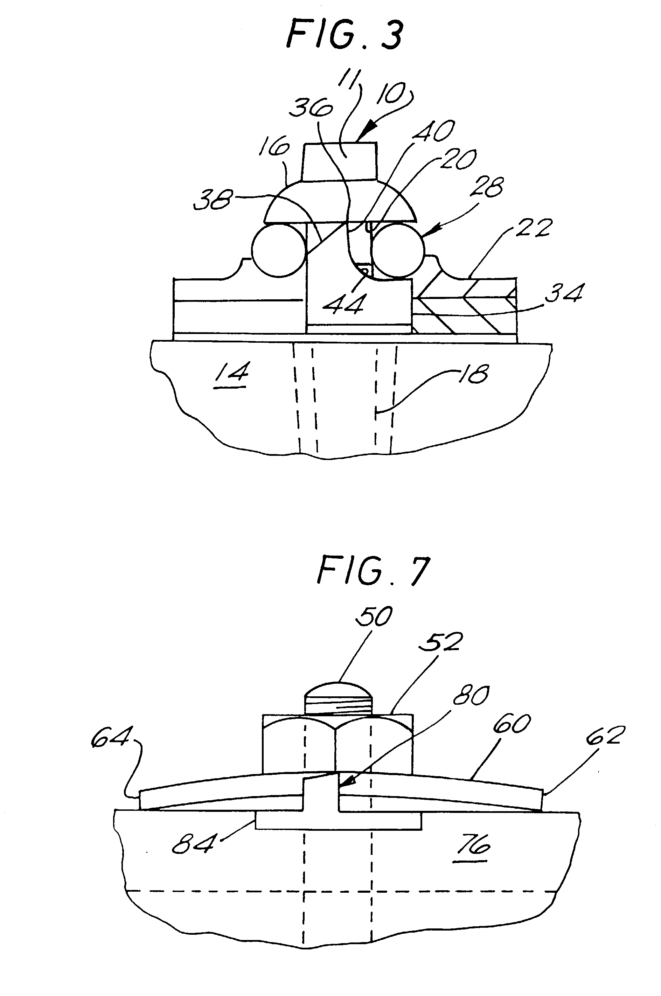

So far, what has been described is well known. However, in accordance with this invention an aperture is formed in the baseplate 22, between the aperture 24 and an outer edge 32 of the baseplate into which a generally L-shaped hardened steel ratchet tooth 34 is fitted. The tooth 34 could be of any shape, provided that an operative apex 36 of the tooth 34 projects upwardly from the upper face of the baseplate 22 by a sufficient amount. As can be seen from Figure 3, the apex 36 of the tooth is defined by an inclined surface 38 and a vertical surface 40, so as to provide a ratcheting effect on the flat underside 20 of the screw 10 when the latter is tightened down. Tightening down of the screw 10 causes deformation of the VOSSLOH clip 28 in known manner, and the tooth 34 is dimensioned and located in its aperture so that the clip 28 has been so deformed as to apply the correct clamping force on the flange of the rail 12 by the time the apex 36 of the tooth 34 will prevent the underside 20 of the screw moving down into the sleeper 14 any further.

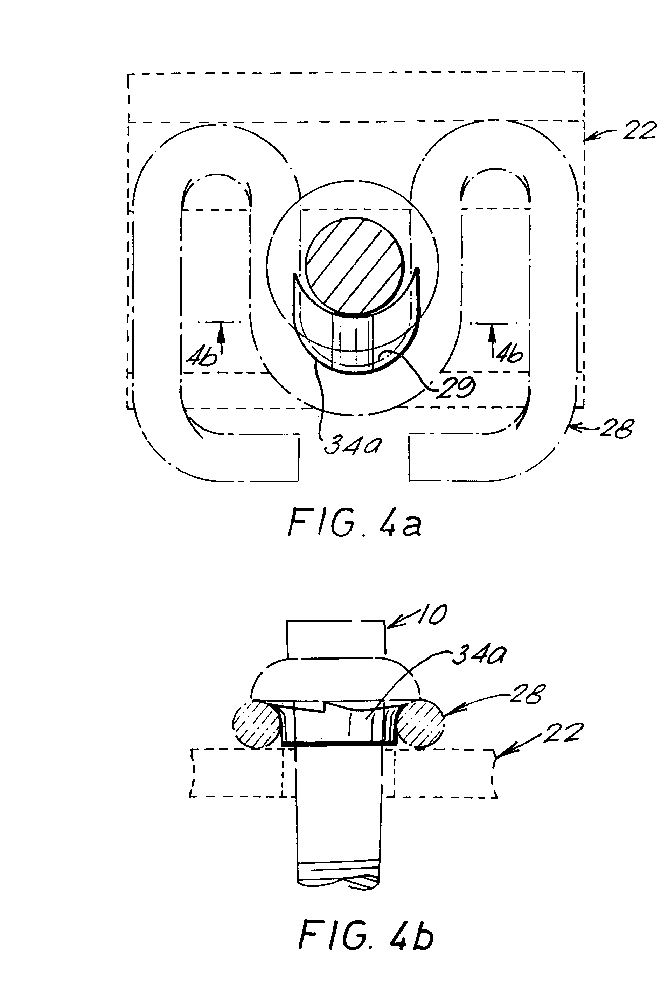

An alternative clamping arrangement is shown in Figures 4a and 4b for use with existing VOSSLOH clips where it is impractical to replace the plastic support plates or to form an aperture in the existing ones to receive a tooth 34. In this case, a generally crescent shaped (in plan) tooth 34a is shaped to fit loosely in the space between the underside 20 of the screw 10 and the bend 29 on the VOSSLOH clip 28 located between the tips 42, i.e. the central portion of the "W". The tooth 34a is of such a height that initially it is located below the upper surface of the VOSSLOH clip 28, but when the spring-like VOSSLOH clip 28 is fully depressed by screwing down the screw 10, the tooth 34a will protrude above the upper level of the clip 28 and engage with the underside 20 off the head of the screw 10, thus preventing further turning of the screw. During turning of the screw, the tooth 34a cannot rotate, since it is trapped between the central potion of the "W" of the VOSSLOH clip 28 and the stem of the screw 10.

If desired, a plurality of radially extending ribs (not shown) may be formed in the surface of the underside 20 of the screw 10, which engage with progressive resistance with the apex 36 of the tooth 34a as the screw is tightened. Alternatively, provided the tooth is formed of a sufficiently hard material, the tooth will gradually cut into or gouge out the surface of the underside 20 of the screw, until there is sufficient resistance to prevent further tightening of the screw. When this occurs, the correct clamping force is applied to the rail flange by the tips 42 of the VOSSLOH clip 28. As can be seen from Figure 3, the tooth 34 is L shaped, so that an upper arcuate surface 44 of the tooth is contacted by part of the circular sectioned VOSSLOH clip to prevent rocking of the tooth 34 as the screw 10 is tightened into the sleeper 14.

Various other designs incorporating VOSSLOH clips can be used. In each case, the clip is deformed using either a securing screw or a nut and bolt assembly which co-operates with a ratchet-tooth to control tightening, and hence clip deformation. Also, in each case, the VOSSLOH clip is in the form of a spring steel rod deformed approximately into the shape of a "W" and by applying pressure to the central portion of the "W", so the spring material is deformed to press the inturned end portions of the "W" down into clamping engagement with a bottom flange of the rail.

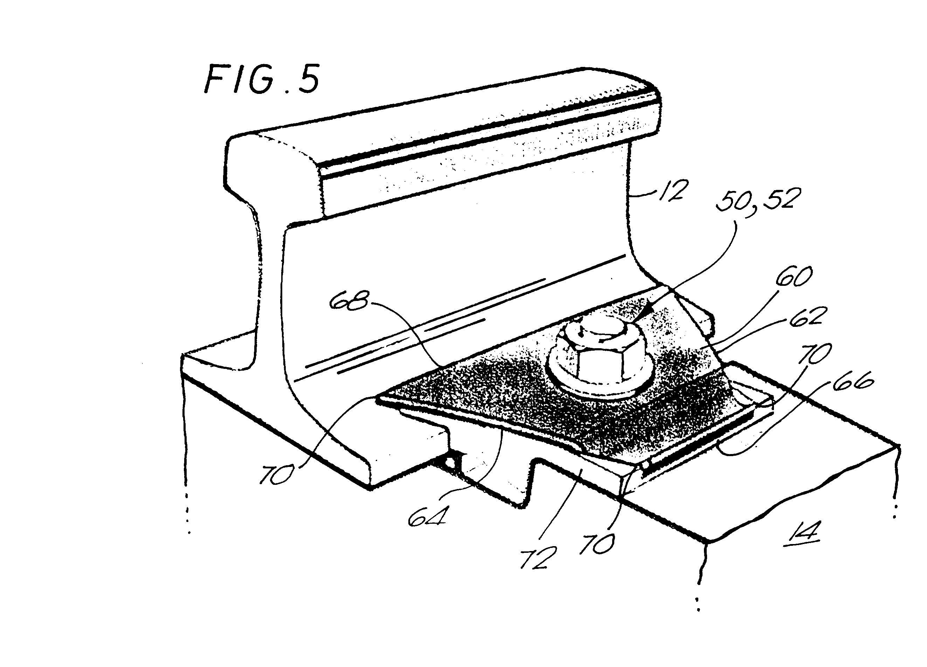

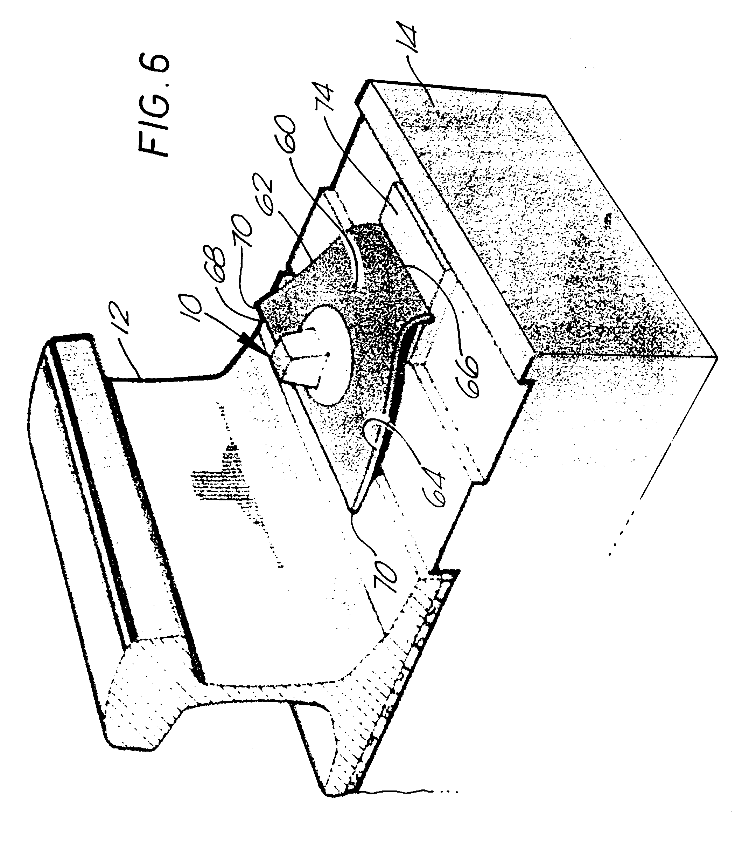

Referring now to Figures 5-7, three clamping assemblies using NABLA plates or clips are illustrated.

A NABLA clip is in the form of a spring steel plate having two concave converging side edges joining two generally parallel spaced edges (which may also be concave) so as to define a four-sided figure, each of the four corners of which extend in the same direction to provide gripping points for the plate, there being an aperture located centrally in the plate through which a fastening screw or bolt extends. As with the VOSSLOH clip, the NABLA clip relies upon sufficient force being applied to the clip so as to deform it by a predetermined amount so that it will clampingly hold the rail in position.

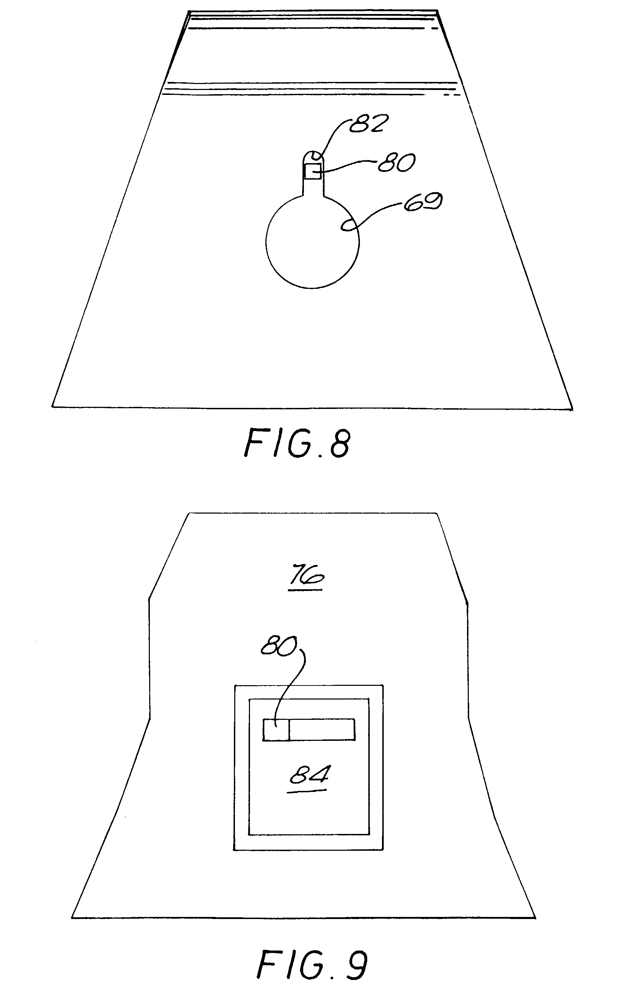

Referring now to Figures 5-9, three different designs of NABLA clip are shown therein. Each clip is formed of a spring steel plate 60 having two concave side edges 62, 64 connecting a short edge 66 to a longer edge 68. The clip has a central aperture 69 for a screw 10 or bolt 50. At each of the junctions of adjacent edges of the NABLA clip 60 there is a downturned corner 70, two of these corners being designed to engage with the bottom flange of the rail 12 and the other two with a base pad 72, 74 or 76 when the NABLA clip is deformed into a clamping position using a screw 10 or a nut and bolt assembly 50, 52. So that the screw 10 cannot strip a thread out of a sleeper when a clamping force is applied to the NABLA clip, or the screw 10 or nut and bolt assembly 50, 52 can only be tightened to the point at which the NAPLA clip is sufficiently deformed or depressed, a ratchet tooth 80 which is only shown in Figures 7-9 is used, which co-operates with the screw head or nut as in the assemblies shown in Figures 1-4.

As can be seen from Figure 8, the NABLA clip has a recess 82 extending into its central aperture 69, through which the ratchet tooth 80 projects so that as the screw or nut 50 is tightened, the NABLA clip will be gradually flattened until the tooth extends above its upper face, and engages the screw head or nut to prevent further tightening thereof. The tooth 80 can be prevented from rotating relative to the NABLA clip by forming it on the face of a rectangular plate 84 (see Figures 7 and 9) which locates in a rectangular recess formed in the base pad 72, 74 or 76 (or even in the sleeper 14).

It will of course be understood that the present invention has been described above purely by way of example, and modifications of detail can be made within the scope of the invention.

## Claims

1. A fastener assembly for e.g., fastening a railway rail (12) to a railway sleeper (14), comprising deformable clip means (28 or 60 or 76), adjustable force applying means (10 or 50,52) which, when tightened, applies an increasing force to the clip means (28 or 60 or 76) to deform the clip means (28 or 60 or 76) to clamp the rail to the sleeper and a ratcheting tooth means (34 or 34a or 80) which co-operates with the force applying means (10 or 50,52) to prevent the latter causing the clip means (28 or 60 or 76) to be deformed beyond an amount such that it applies the correct clamping force to clamp the rail (12) to the sleeper (14), or to prevent damage occurring due to over-tightening of the force applying means (10 or 50,52).

2. An assembly according to claim 1 wherein the force applying means comprises a screw (10) having a head portion (16) and a threaded shank (18) for engaging a bore in the railway sleeper, and the clip means has an aperture (69) or the like through which the threaded shank (18) of the screw (10) passes.

3. An assembly according to claim 1 in which the force applying means comprises a nut (52) which co-operates with a threaded bolt (50) projecting from the sleeper, and the clip means has an aperture (69) or the like through which the bolt passes.

4. An assembly according to claim 2 or 3 wherein the head (16) of the screw (10) or the nut (52) is serrated on a lower face thereof to engage with the tooth means (34 or 34a or 80).

5. An assembly according to claim 2 or 3 wherein the head (16) of the screw (10) or the nut (52) is formed of a softer material than the tooth means (34 or 34a or 80).

6. An assembly according to any one of claims 1-5, in which the tooth means (34 or 34a or 80) is located in a base plate (22 or 72 or 74 or 76) with which the clip means co-operates, and in which the base plate (22 or 72 or 74 or 76) forms a key with the sleeper (14), there being an aperture (24 or 69) in the base plate (22 or 72 or 74 or 76) through which the force applying means (10 or 50,52) passes and wherein the base plate (22 or 72 or 74 or 76) prevents the tooth means (34 or 34a or 80) from turning as the force applying means (10 or 50,52) is progressively tightened.

7. An assembly according to any one of claims 1-5 wherein the tooth means (34a) is located in a gap (29) between the clip means (28) and the force applying means (10, 50,52), and is shaped such that when so located it cannot rotate.

8. An assembly according to any one of claims 1-6 wherein the clip means is a VOSSLOH clip (28) or a NABLA clip (60 or 62).

9. An assembly according to claim 7, wherein the clip means is a VOSSLOH clip (28).

10. An assembly according to any one of the preceding claims wherein, when the ratcheting tooth means (34, 34a or 80) projects above the clip means (28 or 60 or 62 or 76) when the force applying means (10 or 50,52) has deformed the clip means (28 or 60 or 62 or 76) by a sufficient amount by applying the correct clamping force to the rail (12), the ratcheting tooth means (34, 34a or 80) will engage the force applying means (10 or 50,52) to prevent further tightening thereof.
